# EUROPEAN PATENT APPLICATION

(11) **EP 2 009 775 A2**
(43) Date of publication of application: **31.12.2008**
(21) Application number: 08011415.0
(22) Date of filing: 24.06.2008
(51) Int. Cl.: H02M 3/155

(54) **Driver circuit and electrical power conversion device**

(30) Priority: 26.06.2007 JP 2007167069
(71) Applicant: Hitachi Ltd., Chiyoda-ku Tokyo 100-8280 (JP)
(72) Inventor: Shigeta, Satoru, Tokyo 100-8220 (JP); Fujino, Shinichi, Tokyo 100-8220 (JP); Noto, Yasuo, Tokyo 100-8220 (JP)
(74) Representative: Beetz & Partner

(57) **Abstract**

An electrical power conversion device includes a switching element (1) in which a principal electrical current flows in a direction from a second electrode (11) towards a first electrode (12) based upon a voltage being applied to a control electrode (13); a voltage control circuit (4) that controls the voltage that is applied to the control electrode (13); and a continuity control circuit (8) that is connected between the second electrode (11) and the control electrode (13) and controls continuitybetween the second electrode (11) and the control electrode (13).

## Description

The disclosure of the following priority application is herein incorporated by reference:

Japanese Patent Application No. 2007-167069 filed June 26, 2007.

The present invention relates to a driver circuit for driving a voltage drive type transistor, and in particular relates to a driver circuit that is used in an electrical power conversion device that performs switching control of a high electrical current with a voltage drive type transistor, or that is used in an electrical power conversion device that controls a voltage or current that is applied to an inductive load.

With an electrical power conversion device that is used in an industrial device or a hybrid automobile, a voltage drive type transistor such as a MOSFET (Metal Oxide Semiconductor Field Effect Transistor) or an IGBT (Insulated Gate Bipolar Transistor) or the like is used as an element for performing switching control of a high electrical current at high efficiency. When switching a high electrical current, in order to protect the element from surge voltage, it is necessary to make a gate resistor large and to switch it slowly.

However, such slow switching exerts the bad influences of causing increase of the switching time and of the switching loss, and of decreasing the utilization ratio of the system voltage and the efficiency. In order to be able to deal with the tradeoffs at high level that are present between the surge voltage, the switching time, and the switching loss, it is contemplated to provide an active clamp circuit or a variable gate resistor circuit to the gate drive circuit or the like.

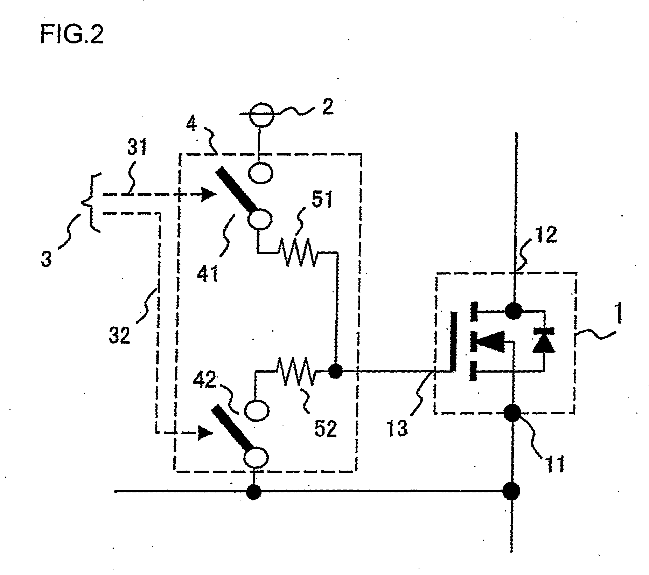

These technical problems will now be explained using Fig. 2. A MOSFET 1 has a source electrode 11, a drain electrode 12, and a gate electrode 13. The continuity (short-circuit) or discontinuity (open-circuit) between the source electrode 11 and the drain electrode 12 is controlled by controlling the potential difference between the source electrode 11 and the gate electrode 13. Thus, in order to control the continuity and discontinuity of the MOSFET 1, the gate voltage is changed over by inputting a gate drive command 3 to a voltage changeover circuit 4.

When the voltage changeover circuit 4 receives a gate ON command 31, a gate ON switch 41 is closed, and electric charge is supplied from a gate drive power supply 2 to the parasitic gate input capacitance of the gate electrode 13 via a gate ON resistor 51. As a result, the MOSFET 1 is turned ON, and continuity is established between its source electrode 11 and its drain electrode 12.

Furthermore, upon receipt of a gate OFF command 32, a gate OFF switch 42 is closed, and the gate electrode 13 and the source electrode 11 are shorted via a gate OFF resistor 52 and the electric charge of the input capacitance of the gate is discharged. As a result, the MOSFET 1 is turned OFF, and discontinuity is established between its source electrode 11 and its drain electrode 12.

Here, it is the gate OFF resistor 52 that determines the speed at which the MOSFET 1 is turned OFF. If the value of this gate OFF resistor 52 is made to be large, since the charge is discharged slowly, accordingly the switching time period becomes long, and therefore a bad influence is experienced of decrease of the voltage utilization ratio, elevation of the temperature of the switching element due to increase of the switching losses, and the like. On the other hand, it is possible to suppress the peak value of the surge voltage that is imposed between the source electrode 11 and the drain electrode 12 due to the inductive component of the electrical current path that is interrupted.

Conversely, if the value of the gate OFF resistor 52 is made to be small, since the charge is discharged quickly, accordingly it is possible to make the switching time period short, and the advantageous effects are obtained of enhancement of the voltage utilization ratio and reduction of the switching losses, but the peak value of the surge voltage becomes high, and it is necessary to consider the tradeoffs that exert an influence upon withstand voltage destruction of the MOSFET 1 and increase of EMC noise and the like.

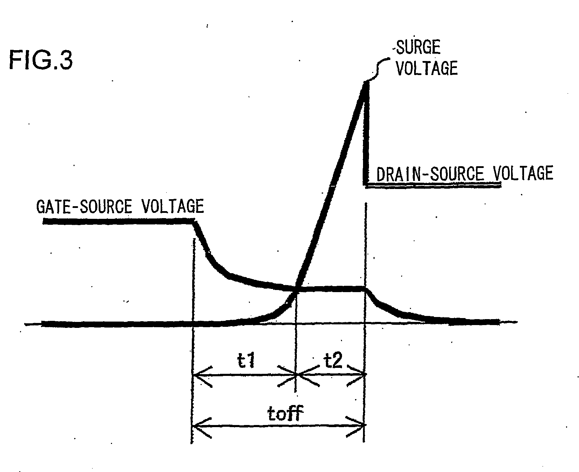

The waveforms of the gate-source voltage and the drain-source voltage when turning the MOSFET 1 OFF are shown in Fig. 3.

In the period t1, the gate voltage during the ON period is discharged until the vicinity of the gate threshold voltage. The length of this period t1 is determined by the product of the resistance value of the gate OFF resistor 52 and the gate input capacitance of the MOSFET 1. And, in the period t2, along with the drain-source voltage being elevated, the charge that flows in due to the reverse transfer capacitance of the MOSFET 1 is drawn off by the gate OFF resistor 52. Since the rate of change of the voltage between the drain and the source is determined by the degree of this drawing off of the electric charge that flows in from the reverse transfer capacitance, accordingly the surge voltage in this period is determined by the resistance value of the gate resistor.

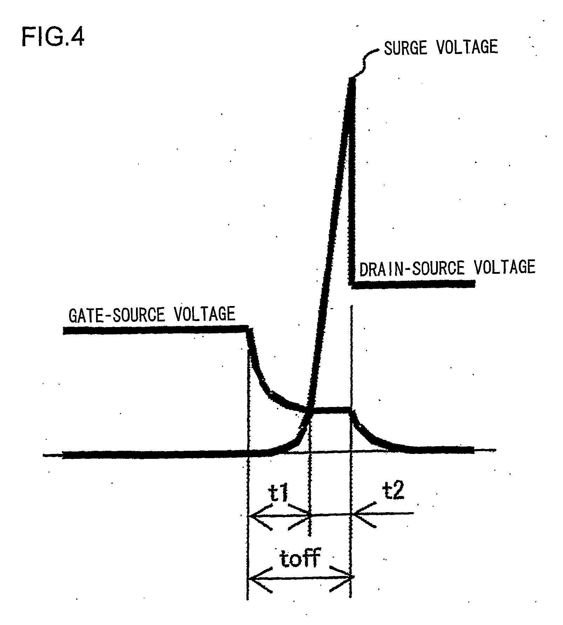

If the resistance value of the gate OFF resistor 52 is made small in order to shorten the switching time period, then it is possible to shorten both the length of the period t1 and also the length of the period t2, as shown in Fig. 4. However, there is the negative effect that the surge voltage becomes high. In order to shorten the switching time period while suppressing the surge voltage, it is necessary to make the period t1 in which no influence is exerted upon the surge voltage extremely short, and to adjust the period t2 that determines the surge voltage to a proper length.

Furthermore although, for cutting-off during short circuiting and excessive current flow, it is considered to be necessary to make the resistance value of the gate resistor as large as possible in order to suppress switching surges, if the resistance value of the gate resistor is made to be large, then this becomes a cause of delay in cutting-off of the current since the length of the period t1 is increased, and there is also the negative effect of increase of the current due to this amount of delay.

Thus, in Japanese Laid-Open Patent Publication -77537, a gate drive circuit is employed that uses an active clamp circuit that includes a Zener diode between the gate and the drain. Such an active clamp circuit is built from a Zener diode between the gate and the drain for feeding back the surge voltage generated at the drain to the gate, and a reverse connection prevention diode for preventing flowing out of the electric change from the gate to the drain while the gate is ON.

If the surge voltage between the drain and the source exceeds the Zener voltage of the Zener diode, then continuity is established between the drain and the gate, and the gate voltage is raised. Due to this, it is possible to clamp the drain-source voltage to the vicinity of a voltage value that is the sum of the Zener voltage and the gate threshold voltage. Since it is thus possible to limit the surge voltage by this voltage value that is the sum of the Zener voltage and the gate threshold voltage, accordingly it is possible to make the resistance value of the gate OFF resistor comparatively small. As a result, it is possible to make the period t1 short, and it is possible to deal with the tradeoffs between the surge voltage and the switching time period at high level.

However, since the electric charge that flows in from the Zener diode is dissipated by the gate OFF resistor, accordingly the electrical power consumption of the resistor increases if the resistance value is made very small. Accordingly, for the gate OFF resistor, it is necessary to use a resistor whose rated power is large. Thus, in order to suppress the consumption of electrical power, it is desirable for the resistance value of the element that is utilized for the gate resistor to be low in the period t1, and for its resistance value to be large in the period t2 in which the Zener diode is continuous (shortened) . This technical problem is the same as when the gate drive circuit that employs only the fixed resistor shown in Fig. 2 is used.

Thus, in Japanese Laid-Open Patent Publication 2002-369495, in order to solve the technical problems described above, a gate drive circuit is used that changes over the resistance value of the gate OFF resistor according to the period.

In Fig. 1 of this document, there are provided a first gate OFF resistor R1 and a second gate OFF resistor R2, and the continuity thereof with the source electrical potential is respectively changed over with a first gate OFF switch Q2 and a second gate OFF switch Q3. At the start of turning OFF both Q2 and Q3 are ON, so that the gate electrical charge is drained away quickly by the resistors R1 and R2 that are connected in parallel, and Q2 is opened when the drain voltage or the gate voltage reaches a predetermined voltage, so that turning OFF is performed only with R2, whereby the desired gate resistor characteristics are implemented. However, there are the negative factors that the circuit becomes larger in size and higher in cost, due to the provision of a circuit for monitoring the drain voltage or the gate voltage, and of a circuit for changing over the resistance value and so on, that makes the circuitry more complicated.

The present invention provides a driver circuit that achieves tradeoffs at high level between surge voltage, and switching time period and switching loss, and that moreover can be implemented with a simple and low cost circuit structure.

According to the 1st aspect of the present invention, an electrical power conversion device comprises a switching element in which a principal electrical current flows in a direction from a second electrode towards a first electrode based upon a voltage being applied to a control electrode; a voltage control circuit that controls the voltage that is applied to the control electrode; and/or a continuity control circuit that is connected between the second electrode and the control electrode and controls continuity between the second electrode and the control electrode.

According to the 2nd aspect of the present invention, in the electrical power conversion device according to the 1st aspect, it is preferred that when the voltage control circuit has operated so as to turn the switching element OFF, the continuity control circuit controls continuity based upon a first potential difference between the second electrode and the first electrode, and upon a second potential difference between the control electrode and the first electrode.

According to the 3rd aspect of the present invention, in the electrical power conversion device according to the 2nd aspect, it is preferred that the continuity control circuit controls continuity to be continuous when the first potential difference is smaller than the second potential difference.

According to the 4th aspect of the present invention, in the electrical power conversion device according to the 3rd aspect, it is preferred that the continuity control circuit controls continuity to be discontinuous when the first potential difference is greater than the second potential difference.

According to the 5th aspect of the present invention, in the electrical power conversion device according to the 2nd aspect, it is preferred that the continuity control circuit comprises a MOSFET and at least one diode.

According to the 6th aspect of the present invention, in the electrical power conversion device according to the 5th aspect, it is preferred that: the MOSFET of the continuity control circuit is a P type MOSFET; a source electrode of the P type MOSFET is connected to the control electrode of the switching element; a drain electrode of the P type MOSFET is connected to an anode of the diode; a cathode of the diode is connected to the second electrode of the switching element; and/or a gate electrode of the P type MOSFET is connected to the voltage control circuit.

According to the 7th aspect of the present invention, in the electrical power conversion device according to the 6th aspect, it is preferred that the at least one diode is a Zener diode.

According to the 8th aspect of the present invention, in the electrical power conversion device according to the 6th aspect, it is preferred that the at least one diode comprises a plurality of Zener diodes that are mutually connected in series, and a bypass diode that is connected in parallel with the plurality of Zener diodes.

According to the 9th aspect of the present invention, in the electrical power conversion device according to the 8th aspect, it is preferred that the reverse withstand voltage of the bypass diode is set to be greater than the sum of Zener voltages of the plurality of Zener diodes that are mutually connected in series.

According to the 10th aspect of the present invention, in the electrical power conversion device according to the 5th aspect, it is preferred that: the MOSFET of the switch circuit is an N type MOSFET; a drain electrode of the N type MOSFET is connected to the control electrode of the switching element; a source electrode of the N type MOSFET is connected to an anode of the diode; a cathode of the diode is connected to the second electrode of the switching element; and/or a gate electrode of the N type MOSFET is driven by an OFF command signal outputted from a control circuit.

According to the 11th aspect of the present invention, an electrical power conversion device for converting DC electrical power to AC electrical power, comprises: an upper arm switching element in which a principal electrical current flows in a direction from a second electrode towards a first electrode based upon a voltage being applied to a control electrode; a lower arm switching element that is connected in series with the upper arm switching element and in which a principal electrical current flows in a direction from a second electrode towards a first electrode based upon a voltage being applied to a control electrode; a battery for supplying DC electrical power, connected between the upper arm switching element and the lower arm switching element that are connected in series; a smoothing capacitor that is connected in parallel with the battery; a controller that controls the upper arm switching element and the lower arm switching element; a first voltage control circuit that generates a voltage that is applied to the control electrode of the upper arm switching element, based upon a first signal outputted from the controller; a second voltage control circuit that generates a voltage that is applied to the control electrode of the lower arm switching element, based upon a second signal outputted from the controller; a first continuity control circuit that is connected between the second electrode and the control electrode of the upper arm switching element and controls continuity between the second electrode and the control electrode of the upper arm switching element; and/or a second continuity control circuit that is connectedbetween the second electrode and the control electrode of the lower arm switching element and controls continuity between the second electrode and the control electrode of the lower arm switching element.

According to the 12th aspect of the present invention, in the electrical power conversion device according to the 11th aspect, it is preferred that: when the controller has outputted a signal for turning the upper arm switching element OFF, the first continuity control circuit controls continuity based upon a first potential difference between the second electrode and the first electrode of the upper arm switching element, and upon a second potential difference between the control electrode and the first electrode of the upper arm switching element; and when the controller has outputted a signal for turning the lower arm switching element OFF, the second continuity control circuit controls continuity based upon a first potential difference between the second electrode and the first electrode of the lower arm switching element, and upon a second potential difference between the control electrode and the first electrode of the lower arm switching element.

According to the 13th aspect of the present invention, in then electrical power conversion device according to the 12th aspect, it is preferred that: the first continuity control circuit controls continuity to be continuous when, in the upper arm switching element, the first potential difference is smaller than the second potential difference; and the second continuity control circuit controls continuity to be continuous when, in the lower arm switching element, the first potential difference is smaller than the second potential difference.

### BRIEF DESCRIPTION OF THE DRAWINGS

Fig. 1 is a block diagram showing the structure of the present invention;
Fig. 2 is a structural circuit diagram showing a prior art device;
Fig. 3 is a switching waveform diagram relating to a case when, in the prior art, the resistance of a gate resistor is large;
Fig. 4 is a switching waveform diagram relating to a case when, in the prior art, the resistance of the gate resistor is small;
Fig. 5 is a switching waveform diagram relating to the present invention;
Fig. 6 is a circuit diagram showing the structure of an electrical power conversion device according to a first embodiment of the present invention;
Fig. 7 is a circuit diagram showing the structure of an electrical power conversion device according to a second embodiment of the present invention;
Fig. 8 is a circuit diagram showing the structure of an electrical power conversion device according to a third embodiment of the present invention;
Fig. 9 shows a way of implementation of this first embodiment in which discrete surface mounted components are employed;
Fig. 10 is a circuit diagram showing the structure of an inverter system according to a fourth embodiment of the present invention;
Fig. 11 is a circuit diagram showing the structure of a DC-DC converter according to a fifth embodiment of the present invention;
Fig. 12 is a waveform diagram relating to a case when a prior art structure is employed; and
Fig. 13 is a waveform diagram relating to a case when the structure of the present invention is employed.

### DESCRIPTION OF THE PREFERRED EMBODIMENTS

In the following, several embodiments of an electrical power conversion device including a driver circuit of the present invention will be explained in detail with reference to the drawings.

### THE FIRST EMBODIMENT

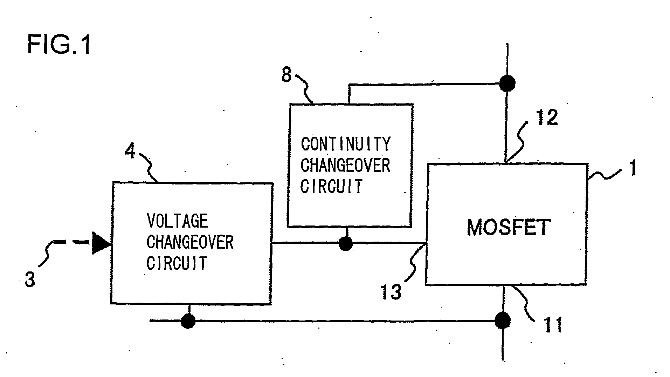

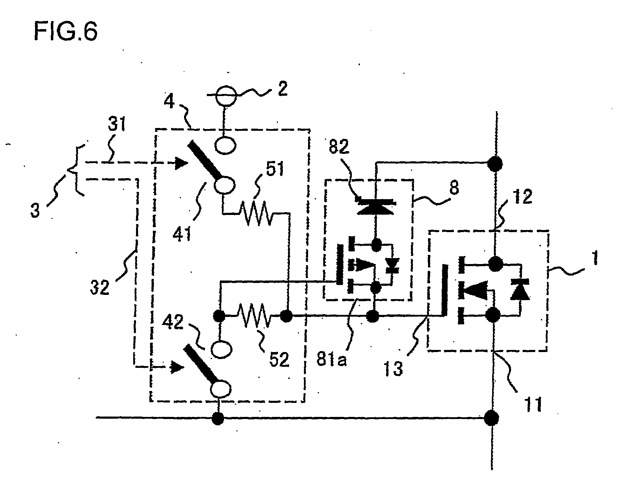

The structure of a first embodiment of the present invention is shown in Figs. 1 and 6.

In this embodiment, a case will be explained in which a MOSFET 1 is used as the voltage drive type transistor (i.e. as the switching element). The gate driver circuit used in the electrical power conversion device of this embodiment includes a continuity changeover circuit 8 in which a diode 82 and a P type MOSFET 81a are connected in series between a gate electrode 13 (i.e. the control electrode) and a drain electrode 12 of the MOSFET 1. The continuity changeover circuit 8 is also referred to as a continuity control circuit that controls continuity between the gate electrode and the drain electrode, and is also referred to as a switch circuit to select an open-circuit or a short-circuit therebetween. The gate driver circuit is also referred to as a switching element driver circuit.

The source electrode of the P type MOSFET 81a is connected to the gate electrode 13 of the MOSFET 1. And the drain electrode of the P type MOSFET 81a is connected to the anode of the diode 82, while the cathode of the diode 82 is connected to the drain electrode 12 of the MOSFET 1. Moreover, the gate electrode of the P type MOSFET 81a is connected between a gate OFF switch 42 and a gate OFF resistor 52 of a voltage changeover circuit 4. The voltage changeover circuit 4 is also referred to as a voltage control circuit.

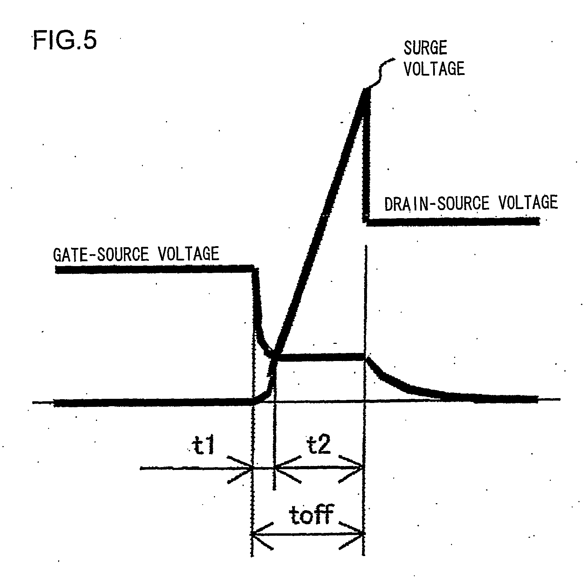

When the MOSFET 1 is in the steady ON state, the gate voltage of the P type MOSFET 81a is discharged by the gate OFF resistor 52. In other words, the P type MOSFET 81a is in the OFF state. When the gate OFF switch 42 is closed and the turning OFF operation of the MOSFET 1 starts, the P type MOSFET 81a goes to continuous (ON state or short-circuit state), and the charge on the gate of the MOSFET 1 is discharged to the drain electrode of the MOSFET 1 via the P type MOSFET 81a and the diode 82. By draining the charge on the gate of the MOSFET 1 via this path, it is possible to shorten the length of the period t1 shown in Fig. 5.

Furthermore, the gate OFF resistor 52 is not included in this path. Due to this, the resistance value of this gate OFF resistor 52 does not exert any influence upon the length of the period t1. As a result, the resistance value of the gate OFF resistor 52 may be selected only in order to obtain the desired characteristics for the time period t2.

In the later half of the period t1, the voltage between the drain and the source (the first potential difference) is elevated, and, when this voltage between the drain and the source becomes greater than the voltage between the gate and the source (the second potential difference), then, since the diode 82 is provided, the continuity between the gate and the drain of the MOSFET 1 is cut off (interrupted) . In other words, the continuity changeover circuit 8 goes into the discontinuous state (OFF state or open-circuit state). Subsequently, the turning OFF characteristic of the MOSFET 1 is governed by the gate OFF resistor 52.

As described above, according to the electrical power conversion device of this first embodiment, when the voltage changeover circuit 4 has outputted a signal for turning the MOSFET 1 to OFF, in other words when the gate OFF switch 42 closes and the turning OFF operation of the MOSFET 1 is started, the continuity changeover circuit 8 is controlled as to continuity (making short-circuit) based upon the drain-source voltage between the drain electrode 12 and the source electrode 11 of the MOSFET 1 (the first potential difference: Vds), and upon the gate-source voltage between its gate electrode 13 and its source electrode 11 (the second potential difference: Vgs).

In more concrete terms, the continuity changeover circuit 8 is controlled so as to be continuous when the drain-source voltage (Vds) is smaller than the gate-source voltage (Vgs) (i.e. when Vds<Vgs), and moreover is controlled so as to be discontinuous when the drain-source voltage (Vds) is greater than the gate-source voltage (Vgs) (i.e. when Vds>Vgs).

By performing control in this manner, in the turning off time period of the MOSFET 1 (tOFF), it becomes possible to shorten just the length of the period t1.

Moreover, by making the diode 82 of this embodiment be a Zener diode, and by making its Zener voltage greater than or equal to the power supply voltage and also less than or equal to the withstand voltage of the MOSFET 1, it becomes possible to make it act as an active clamp circuit that protects the MOSFET 1 from surge voltage.

At this time, the electrical power consumption of the Zener diode 82 depends upon the resistance value of the gate OFF resistor 52. However, since the resistance value of the gate OFF resistor 52 can be chosen independently of the period t1, accordingly it can be selected to the optimum constant value in a simple and easy manner. By providing an active clamp circuit to the electrical power conversion device, it is possible to clamp a surge voltage in the vicinity of the value that is obtained by adding the gate threshold voltage to the Zener voltage. Furthermore it becomes possible to obtain a circuit structure that has high cost effectiveness, since the number of components is the same as in the circuit of Fig. 6.

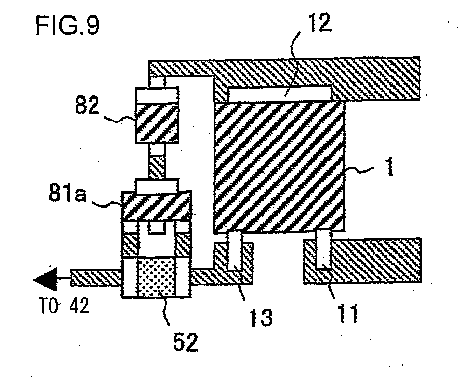

Next, in Fig. 9, an example of implementation of this embodiment is shown in which discrete surface mounted components are employed. In this figure, there is shown a way of implementing the MOSFET 1 having the source electrode 11, the drain electrode 12, and the gate electrode 13, and the P type MOSFET 81a, the diode 82, and the gate OFF resistor 52. As shown in this figure, these can be implemented with a simple structure. Moreover, it would also be acceptable for the continuity changeover circuit 8 to be made as a circuit upon a semiconductor chip that includes the MOSFET 1. In this case, the method of implementation would become yet simpler.

### THE SECOND EMBODIMENT

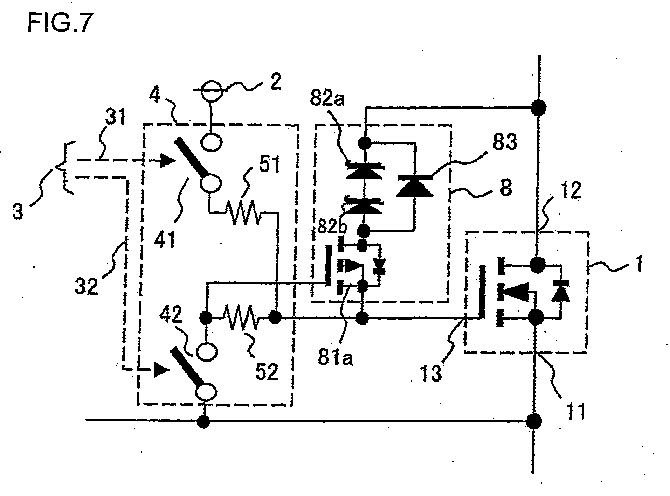

The structure of a second embodiment of the present invention is shown in Fig. 7.

When the diode within the continuity changeover circuit 8 is made as a Zener diode and constitutes an active clamp circuit, due to the problems of selection of the voltage range of the Zener diode, and of its temperature characteristics and of heat generation, sometimes the Zener diode is provided as multi-stage, as in the case of the Zener diodes 82a and 82b of this second embodiment. In this case since the forward direction voltage of the Zener diodes also becomes multi-stage, even when in the period t1 the connection between gate and drain is made continuous, accordingly the gate charge may not be sufficiently completely discharged.

Thus, as shown in Fig. 7, a bypass diode 83 is connected in parallel with the multi-stage Zener diodes 82a and 82b, and the reverse withstand voltage of the bypass diode 83 is set to be greater than the sum of the Zener voltages of the multi-stage Zener diodes 82a and 82b. By employing this type of structure, it is possible to perform discharge with the forward direction voltage of the bypass diode 83 in the initial turning OFF period t1, while, during the active clamp operation in the later turning OFF period period t2, it is possible to regulate the clamp voltage with the sum of the Zener voltages of the Zener diodes 82a and 82b.

The structure of this second embodiment is particularly effective when driving an application whose surge energy is large or a voltage drive type transistor whose gate input capacitance is large.

### THE THIRD EMBODIMENT

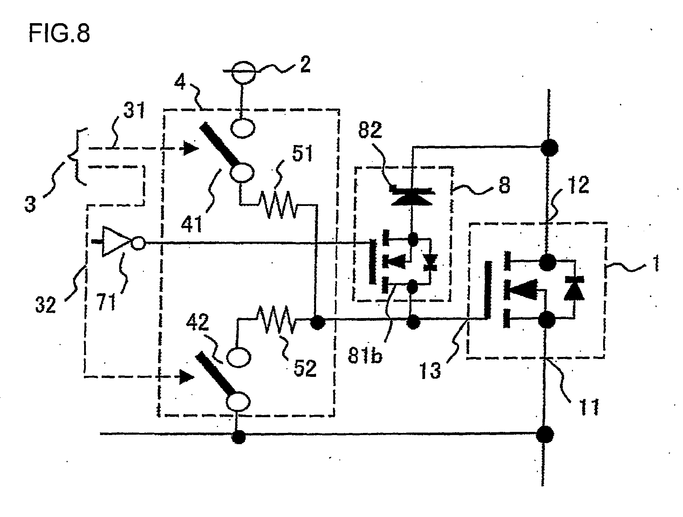

The structure of a third embodiment of the present invention is shown in Fig. 8.

In this embodiment, an N type MOSFET 81b is used as the switch of the continuity changeover circuit 8. Furthermore, the gate electrode of this N type MOSFET 81b is driven by a gate OFF command 32. The gate OFF command 32 is inputted to the gate electrode of the N type MOSFET 81b via a NOT circuit 71. The structure of this third embodiment is advantageous from the aspect of being able to control the gate voltage of the N type MOSFET 81b independently, i.e. without any dependence upon the state of the gate OFF switch 42.

Since, in the first and second embodiments described above, the input capacitance of the P type MOSFET 81a is connected in parallel with the gate OFF resistor 52, accordingly the same advantageous effect upon the gate constant is obtained as in the case of fitting a high pass filter. Due to this, it is necessary to design the gate constant in consideration of the influence that is exerted by the input capacitance of the P type MOSFET 81a.

By contrast, in this third embodiment, the feedback capacitance of the N type MOSFET 81b is connected in parallel, so that the normal feedback capacitance becomes sufficiently small in value with respect to the input capacitance. Due to this, it is possible to make the influence of the feedback capacitance small. In other words, the selection width of the gate constant becomes further widened.

### THE FOURTH EMBODIMENT

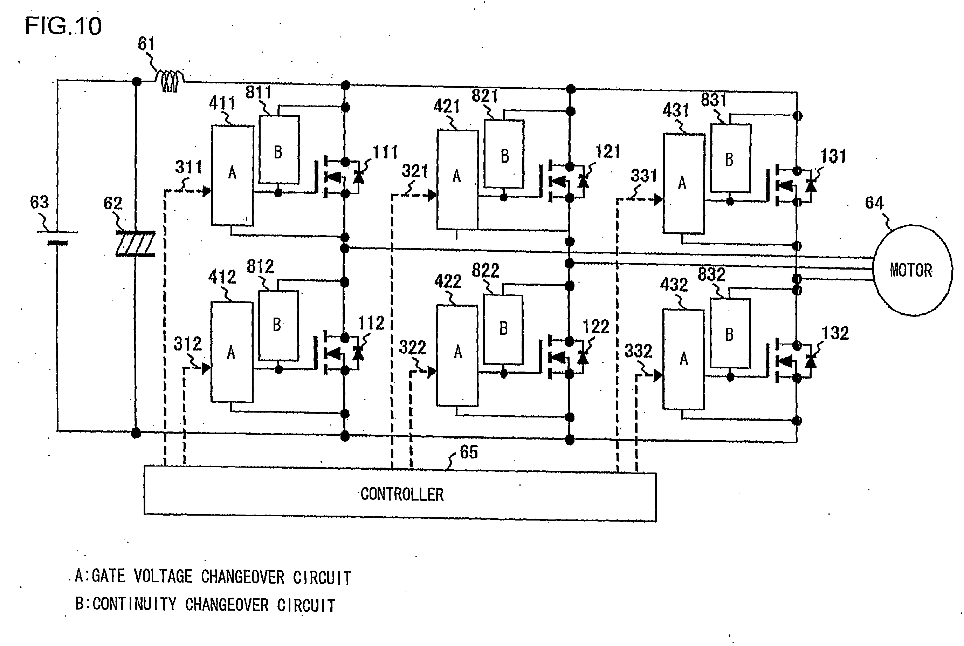

The structure of a fourth embodiment of the present invention is shown in Fig. 10. Fig. 10 is a figure showing a three phase inverter system 100.

In this inverter system 100, a controller 65 outputs gate drive commands 311, 312, 321, 322, 331, and 332. MOSFETs 111, 121, and 131 as upper arms for the U phase, the V phase, and the W phase respectively, and MOSFETs 112, 122, and 132 as lower arms for the U phase, the V phase, and the W phase respectively, perform ON/OFF switching operation via respective voltage changeover circuits 411, 412, 421, 422, 431, and 432, based upon the respective gate drive commands 311, 312, 321, 322, 331, and 332 that are outputted from the controller 65. Due to the switching operation of these MOSFETs 111, 112, 121, 122, 131, and 132, the inverter system 100 outputs U phase, V phase, and W phase AC electrical current to a motor 64, and thereby drives the motor 64.

The battery 63 is connected between the upper and lower arms that are connected in series, so that DC electrical power is supplied. This inverter system converts the DC electrical power that is supplied from the battery 63 to three phase AC electrical power. Moreover, a smoothing capacitor 62 is connected in parallel with the battery 63, in order to smooth out voltage fluctuations when the MOSFETs 111, 112, 121, 122, 131, and 132 perform switching. Since a main circuit parasitic inductance 61 is present in the line that includes this smoothing capacitor 62, accordingly surge voltages are generated when the various MOSFETs perform their switching actions.

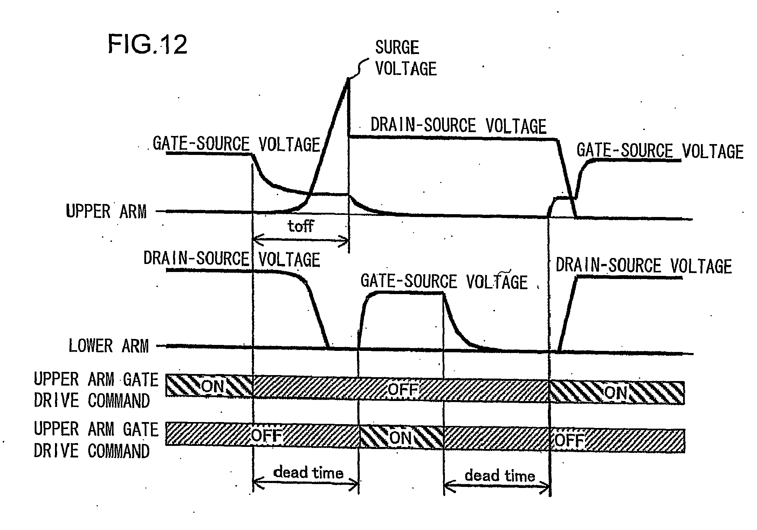

Here, the operation of the upper and lower arms when the inverter system is driven with a fixed resistor gate drive circuit according to the prior art is shown in Fig. 12. A certain time period is required for turning OFF, in order to suppress the surge voltage that originates in the main circuit parasitic inductance 61. Due to this, it is necessary to adjust the gate resistor. As a result, there is a tendency for the turning OFF time period (tOFF) to become large.

Moreover, in order to prevent short circuiting between the upper and lower arms, it is not possible to turn the lower arm ON until the end of the turning OFF time period (tOFF) for the upper arm, that is the opposite arm. Due to this a time period (a so called dead time) is provided in which both the upper and lower arms are turned OFF together.

When the turning OFF time period (tOFF) is large, it is necessary to make the dead time large as well. As a result, the time periods in which the upper and lower arms can each be turned on become short. In other words, the voltage utilization ratio becomes bad, and it becomes impossible to implement the voltage that is desired by the main controller 65.

Thus, with the inverter system 100 of this fourth embodiment, gate drive circuits incorporating continuity changeover circuits 811, 812, 821, 822, 831, and 832 are employed for the MOSFETs 111, 112, 121, 122, 131, and 132 respectively.

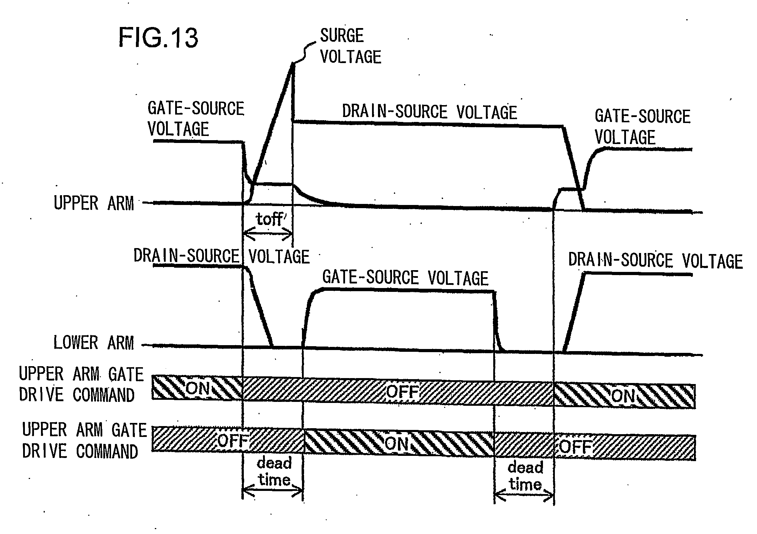

The operation of the upper and lower arms when driving the inverter system that incorporates this type of gate drive circuits is shown in Fig. 13. Even though the surge voltage is suppressed to the same level as in the prior art, it is still possible very much to shorten the period t1 described above. As a result, it is possible to reduce the turning OFF time period (tOFF). Accordingly it is also possible to make the dead time short, to improve the voltage utilization ratio, and to approach the ideal operation as intended by the controller 65.

As described above, according to the inverter system 100 of this fourth embodiment, it is possible to implement reduction of noise due to the low level of current distortion, and smooth control performance.

### THE FIFTH EMBODIMENT

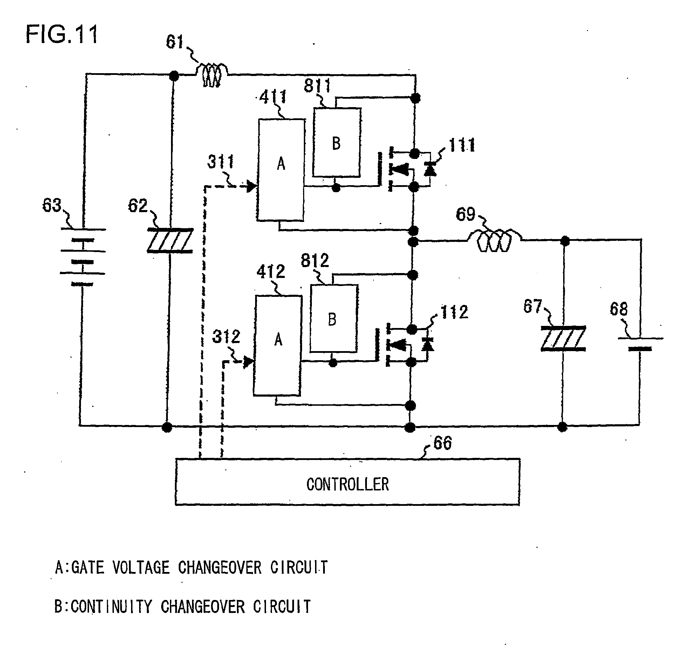

The structure of a fifth embodiment of the present invention is shown in Fig. 11. Fig. 11 is a figure showing a DC-DC converter 200.

The structure of this DC-DC converter 200 may be obtained by adding an inductor 69, a smoothing capacitor 67, and a battery 68 to the structure of one phase of the inverter system 100.

Because the carrier frequency in this DC-DC converter 200 is high as compared with the inverter system 100 of the fourth embodiment described above (from several tens of Hertz to several hundreds of Hertz), it is necessary to shorten the turning OFF time period (tOFF) as much as possible. Generally, the higher is the carrier frequency, the smaller it is possible to make the physical structure of the inductor 69 and the transformer that are used. Due to this, by employing the structure of the present invention, it becomes possible to implement a DC-DC converter of high efficiency that is lower in cost.

Although various embodiments of the present invention have been explained above in concrete terms, the present invention is not to be considered as being limited by the details of any of these disclosed embodiments; various alterations might be made in any particular implementation of the present invention, provided that its technical concept is adhered to.

For example although, in the embodiments described above, cases were explained of using MOSFETs as the voltage drive type transistors, instead of MOSFETs, IGBTs may also be used. If IGBTs are used, then the source of a MOSFET corresponds to the emitter of an IGBT, and the drain of a MOSFET corresponds to the collector of an IGBT. It should be understood that although with MOSFETs, due to their structure, the free-wheeling diodes are provided internally, if IGBTs are used, these diodes need to be attached externally.

Furthermore, it is sufficient for the magnitude relationship between the drain-source voltage (Vds) and the gate-source voltage (Vgs) and the relationship between the continuous/discontinuous control of the continuity changeover circuit 8 to substantially agree with one another, but it is not required that they should agree with one another precisely. If necessary due to the circuit characteristics or some other reason, then it is possible for the above described relationships to vary appropriately, provided that the essential features of the present invention are not departed from. Due to this, it is also possible to control the continuity changeover circuit 8 so that it is continuous when the difference between the drain-source voltage (Vds) and the gate-source voltage (Vgs) is smaller than a predetermined value (Va) other than zero (i. e. if Vds-Vgs<Va), while the continuity changeover circuit 8 is controlled so as to be discontinuous when this difference is larger than the predetermined value (i.e. if Vds-Vgs>Va).

According to the various embodiments of the present invention as described above, in the period (t1) during turning OFF, the electric charge that is accumulated between the gate electrode 13 and the source electrode 11 can be discharged via the continuity changeover circuit 8 and the drain electrode 12, without any relationship with the gate OFF resistor 52. Due to this, it is possible very much to shorten the period (t1), and moreover it is possible to select the value of the gate OFF resistor 52 for surge voltage suppression to an optimum value that is completely logically decoupled from the characteristics of the period (t1).

In other words, it is possible to provide an electrical power conversion device that uses a gate drive circuit which, while restraining surge voltage, also shortens the switching time period.

As a result, due to shortening of the turning OFF time period, it is possible to implement enhancement of the voltage utilization ratio, as well as reduction of voltage distortion. For example, in the case of application to an inverter system for driving a motor, it is possible to implement smooth motor driving and also reduction of the noise level. Moreover, in the case of application to a DC-DC converter, due to provision of satisfactory control performance while increasing the carrier frequency, it becomes possible to anticipate enhancement of compactness, reduction of cost, and increase of efficiency.

Furthermore even if the gate resistor is made large for interception (cutting-off) during a short circuit or a flow of an excessive electrical current, still the current interception delay is kept to a minimum limit due to it being possible to shorten the period (t1) without any relationship with the value of the gate resistor, and accordingly the advantageous effect is obtained that it is possible to suppress increase of the electrical current due to the amount of delay.

The present invention can be applied to any gate drive circuit in which a tradeoff is present between surge voltage suppression and shortening of the turning OFF time period. In particular, the present invention may be utilized for application to an inverter system or a DC-DC converter or the like of a hybrid automobile or an electric automobile or the like.

The above-mentioned features and embodiments can be combined in any way, partly or as a whole.

## Claims

1. An electrical power conversion device, comprising:
a switching element (1) in which a principal electrical current flows in a direction from a second electrode (11) towards a first electrode (12) based upon a voltage being applied to a control electrode (13);
a voltage control circuit (4) that controls the voltage that is applied to the control electrode (13); and
a continuity control circuit (8) that is connected between the second electrode (11) and the control electrode (13) and controls continuity between the second electrode (11) and the control electrode (13).

2. An electrical power conversion device according to claim 1, wherein
when the voltage control circuit (4) has operated so as to turn the switching element (1) OFF, the continuity control circuit (8) controls continuity based upon a first potential difference (V_{ds}) between the second electrode (11) and the first electrode (12), and upon a second potential difference (V_{gs}) between the control electrode (13) and the first electrode (12).

3. An electrical power conversion device according to claim 2, wherein
the continuity control circuit (8) controls continuity to be continuous when the first potential difference (V_{ds}) is smaller than the second potential difference (V_{gs}).

4. An electrical power conversion device according to claim 3, wherein
the continuity control circuit (8) controls continuity to be discontinuous when the first potential difference (V_{ds}) is greater than the second potential difference (V_{gs}).

5. An electrical power conversion device according to at least one of claims 1-4, wherein
the continuity control circuit (8) comprises a MOSFET (81a, 81b) and at least one diode (82).

6. An electrical power conversion device according to claim 5, wherein:
the MOSFET of the continuity control circuit is a P type MOSFET (81a);
a source electrode of the P type MOSFET (81a) is connected to the control electrode (13) of the switching element (1);
a drain electrode of the P type MOSFET (81a) is connected to an anode of the diode (82);
a cathode of the diode (82) is connected to the second electrode (11) of the switching element (1); and
a gate electrode of the P type MOSFET is connected to the voltage control circuit (4).

7. An electrical power conversion device according to claim 5 or 6, wherein
the at least one diode (82) is a Zener diode (82a, 82b).

8. An electrical power conversion device according to claim 5 or 6, wherein
the at least one diode (82) comprises a plurality of Zener diodes (82a, 82b) that are mutually connected in series, and a bypass diode (83) that is connected in parallel with the plurality of Zener diodes (82a, 82b).

9. An electrical power conversion device according to claim 8, wherein
the reverse withstand voltage of the bypass diode (83) is set to be greater than the sum of Zener voltages of the plurality of Zener diodes (82a, 82b) that are mutually connected in series.

10. An electrical power conversion device according to at least one of claims 5-9, wherein:
the MOSFET of the switch circuit is an N type MOSFET (81b);
a drain electrode of the N type MOSFET is connected to the control electrode (13) of the switching element (1);
a source electrode of the N type MOSFET (81b) is connected to an anode of the diode (82);
a cathode of the diode is connected to the second electrode (11) of the switching element (1); and
a gate electrode of the N type MOSFET (81b) is driven by an OFF command signal outputted from a control circuit.

11. An electrical power conversion device for converting DC electrical power to AC electrical power, comprising:
an upper arm switching element in which a principal electrical current flows in a direction from a second electrode towards a first electrode based upon a voltage being applied to a control electrode;
a lower arm switching element that is connected in series with the upper arm switching element and in which a principal electrical current flows in a direction from a second electrode towards a first electrode based upon a voltage being applied to a control electrode;
a battery (63) for supplying DC electrical power, connected between the upper arm switching element and the lower arm switching element that are connected in series;
a smoothing capacitor (62) that is connected in parallel with the battery (63);
a controller (65) that controls the upper arm switching element and the lower arm switching element;
a first voltage control circuit that generates a voltage that is applied to the control electrode of the upper arm switching element, based upon a first signal outputted from the controller;
a secondvoltage control circuit that generates a voltage that is applied to the control electrode of the lower arm switching element, based upon a second signal outputted from the controller;
a first continuity control circuit that is connected between the second electrode and the control electrode of the upper arm switching element and controls continuity between the second electrode and the control electrode of the upper arm switching element; and
a second continuity control circuit that is connected between the second electrode and the control electrode of the lower arm switching element and controls continuity between the second electrode and the control electrode of the lower arm switching element.

12. An electrical power conversion device according to claim 11, wherein:
when the controller (65) has outputted a signal for turning the upper arm switching element OFF, the first continuity control circuit controls continuity based upon a first potential difference between the second electrode and the first electrode of the upper arm switching element, and upon a second potential difference between the control electrode and the first electrode of the upper arm switching element; and
when the controller has outputted a signal for turning the lower arm switching element OFF, the second continuity control circuit controls continuity based upon a first potential difference between the second electrode and the first electrode of the lower arm switching element, and upon a second potential difference between the control electrode and the first electrode of the lower arm switching element.

13. An electrical power conversion device according to claim 11 or 12, wherein:
the first continuity control circuit controls continuity to be continuous when, in the upper arm switching element, the first potential difference is smaller than the second potential difference; and
the second continuity control circuit controls continuity to be continuous when, in the lower arm switching element, the first potential difference is smaller than the second potential difference.
